Europäisches Patentamt

European Patent Office

Office européen des brevets

(11) Veröffentlichungsnummer: **0 221 423**
**A1**

(12) # EUROPÄISCHE PATENTANMELDUNG

(21) Anmeldenummer: 86114425.1

(22) Anmeldetag: 17.10.86

(51) Int. Cl.⁴: **G 05 D 1/02**
**A 47 L 11/40**

(30) Priorität: 17.10.85 DE 3536973

(43) Veröffentlichungstag der Anmeldung:
13.05.87 Patentblatt 87/20

(84) Benannte Vertragsstaaten:
AT BE CH DE ES FR GB GR IT LI LU NL SE

(71) Anmelder: Knepper, Hans-Reinhard
Pfalzgrafenstrasse 80
D-4200 Oberhausen 14(DE)

(72) Erfinder: Knepper, Hans-Reinhard
Pfalzgrafenstrasse 80
D-4200 Oberhausen 14(DE)

(74) Vertreter: Patentanwälte Schulze Horn und Hoffmeister
Goldstrasse 36
D-4400 Münster(DE)

(54) Verfahren zum automatischen Führen von selbstfahrenden Bodenreinigungsmaschinen sowie Bodenreinigungsmaschine zur Durchführung des Verfahrens.

(57) Die Erfindung betrifft ein Verfahren zum automatischen Führen von selbstfahrenden Bodenreinigungsmaschinen längs einer vorgegebenen Bewegungsbahn auf einem begrenzten, abzuarbeitenden Flächenareal, bei welchem eine Folge von in einem Datenspeicher gespeicherten Wegteilstrecken abgerufen und von der Maschine abgefahren wird und bei welchem Markierungen mittels wenigstens eines Sensors erkannt und in Bahnkorrektur-Steuerbefehle für Antrieb und/oder Lenkung der Maschine umgesetzt werden, welches dadurch gekennzeichnet ist, daß als Markierungen entlang der Bewegungsbahn (5) auf oder über dem zu bearbeitenden Flächenareal (31) vorhandene, lineare oder geschwungene Strukturen, wie Regalkanten und/oder -ränder (61 - 63) und/oder Begrenzungswände (7), verwendet werden, daß die Bodenreinigungsmaschine (1) auf ersten Teilabschnitten (50 - 58) ihrer Bewegungsbahn (5) mittels wenigstens eines seitwärts gerichteten Entfernungsmessers (12), wie Ultraschalloder Laserentfernungsmessers, entlang den erkannten Strukturen (61 - 63, 7) geführt wird und daß die Bodenreinigungsmaschine (1) auf zweiten Teilabschnitten (50' - 57') ihrer Bewegungsbahn (5) ohne Führung durch vorhandene Strukturen (61 - 63, 7) vom Ende einer erkannten Struktur (61 - 63, 7) bis zum Anfang einer nächsten zu erkennenden Struktur (61 - 63, 7) frei fährt.

Weiterhin betrifft die Erfindung eine Bodenreinigungsmaschine zur Durchführung des Verfahrens, mit einem Fahrwerk mit Antrieb und Lenkung, mit Mitteln zur Trocken- und/oder Naßreinigung der Befahrenen Bodenfläche, mit einem Datenspeicher zur Speicherung einer abrufbaren Folge von Wegteilstrecken und mit einer den Antrieb und/oder die Lenkung in Abhängigkeit von den im Datenspeicher gespeicherten sowie von Positionserkennungssensoren gelieferten Daten steuernden Steuereinheit, welche dadurch gekennzeichnet ist, daß sie über zwei unabhängig voneinander antreibbare Räder (14) verfügt, von denen je eines links und reckts an der Maschine (1) angeordnet ist, daß die Maschine (1) über wenigstens ein nicht angetriebenes, frei verschwenkbares Nachlaufrad verfügt, daß an den beiden angetriebenen Rädern (14) mit der Steuereinheit (2) verbundene Drehimpulsgeber (11) zur Messung der von jedem Rad (14) zurückgelegten Wegstrecke als erste Sensoren angeordnet sind und daß die Maschine (1) an wenigstens einer Längsseite wenigstens einen mit der Steuereinheit (2) verbundenen Entfernungsmesser (12), wie Ultraschall- oder Laserentfernungsmesser, als zweiten Sensor aufweist.

EP 0 221 423 A1

./...

Fig.1

Verfahren zum automatischen Führen von selbstfahrenden Bodenreinigungsmaschinen sowie Bodenreinigungsmaschine zur Durchführung des Verfahrens

Die Erfindung betrifft ein Verfahren zum automatischen Führen von selbstfahrenden Bodenreinigungsmaschinen längs einer vorgegebenen Bewegungsbahn auf einem begrenzten, abzuarbeitenden Flächenareal, bei welchem eine Folge von in einem Datenspeicher gespeicherten Wegteilstrecken abgerufen und von der Maschine abgefahren wird und bei welchem Markierungen mittels wenigstens eines Sensors erkannt und in Bahnkorrektur-Steuerbefehle für Antrieb und/oder Lenkung der Maschine umgesetzt werden. Weiterhin betrifft die Erfindung eine Bodenreinigungsmaschine zur Durchführung des Verfahrens, mit einem Fahrwerk mit Antrieb und Lenkung, mit Mitteln zur Trocken- und/oder Naßreinigung der befahrenen Bodenfläche, mit einem Datenspeicher zur Speicherung einer abrufbaren Folge von Wegteilstrecken und mit einer den Antrieb und/oder die Lenkung in Abhängigkeit von den im Datenspeicher gespeicherten sowie von Positionserkennungssensoren gelieferten Daten steuernden Steuereinheit.

Ein Verfahren sowie eine Maschine der eingangs genannten Art sind bekannt. So beschreibt die DE-PS 29 10 490 ein Verfahren zum automatischen Führen von Fahrzeugen längs einer vorgegebenen Bahn sowie eine Vorrichtung zur Durchführung eines solchen Verfahrens. Nachteilig ist bei diesem Verfahren und bei der entsprechenden Vorrichtung, daß mit hohem technischem Aufwand, nämlich durch eine Fernsehkamera, an der Bahn vorgesehene Markierungen mit unterschiedliche Fahrtinformationen darstellenden Formmustern abzutasten und zu erkennen sind. Neben dem hohen Aufwand für die Elektronik ist noch als Nachteil anzusehen, daß entlang der Bewegungsbahn eigens für diesen Zweck dienende Markierungen, z. B. an der Bodenoberfläche,anzubringen sind. Diese Markierungen werden leicht durch Beschädigungen oder auf andere Art für das Fahrzeug unerkennbar, so daß eine sichere Betriebsweise nicht gewährleistet ist.

Aus der DE-OS 26 00 907 ist eine Fußbodenbearbeitungsmaschine bekannt, welche eine Abstandskontrollvorrichtung zur Kontrolle der Abweichung des Laufes der Maschine beim Betrieb von einer aufgezeichneten Bewegungsbahn sowie Vorrichtungen zur Korrektur der Bahn beim Vorhandensein von Abweichungen aufweist. Nachteilig ist hier jedoch, daß die Abstandskontrolle mit Hilfe von oberhalb der Bewegungsbahn eigens angebrachten Reflektoren erfolgt. Die erforderliche Installation der Reflektoren ist aufwendig und führt zu einer geringen Flexibilität der Maschine in Bezug auf Änderungen der vorgegebenen Bewegungsbahn.

Die DE-OS 31 13 086 zeigt ein Positionierungssensorsystem für automatisch gesteuerte Fahrzeuge. Dieses erfordert jedoch genau senkrecht zur Bodenfläche und rechtwinklig zueinander ausgerichtete Reflexionsflächen, welche zudem für das Fahrzeug ständig "sichtbar" sein müssen. Auch hier ist also ein relativ hoher Installationsaufwand erforderlich und es sind Einschränkungen beim Betrieb des Fahrzeuges gegeben.

Es stellt sich daher die Aufgabe, ein Verfahren der eingangs genannten Art anzugeben, das die aufgeführten Nachteile vermeidet und das insbesondere ohne Installationen auskommt und zugleich eine hohe Betriebssicherheit und Einsatzflexibilität aufweist. Weiterhin stellt sich die Aufgabe, eine Bodenreinigungsmaschine der eingangs genannten Art zur Durchführung des Verfahrens zu schaffen, welche ebenfalls die vorangehend aufgeführten Nachteile vermeidet und die insbesondere betriebssicher arbeitet und die einen vergleichsweise geringen technischen Aufwand erfordert und damit kostengünstig herstellbar ist.

Die Lösung der erstgenannten Aufgabe gelingt erfindungsgemäß durch ein Verfahren der eingangs genannten Art gemäß dem Kennzeichen des Anspruchs 1. Der besondere Vorteil des Verfahrens gemäß Erfindung liegt darin, daß vorhandene Strukturen für die Führung der Maschine verwendet werden und daß keinerlei zusätzliche Installationen entlang der vorgesehenen Bewegungsbahn erforderlich sind. Strukturen der erforderlichen Art, z. B. Regale und Begrenzungswände, sind praktisch in jedem Bereich, der für den Einsatz der Bodenreinigungsmaschine infrage kommt, vorhanden. In der Praxis ist somit keine Einschränkung der Anwendbarkeit des Verfahrens gegeben. Teilabschnitte der Bewegungsbahn, auf denen keine Orientierung anhand von entlang der Bahn verlaufenden Strukturen möglich ist, werden frei fahrend überbrückt. Da diese frei durchfahrenen Teilabschnitte im Vergleich zu den geführten Teilabschnitten der Bewegungsbahn vergleichsweise kurz sind, treten bei einer Bodenreinigungsmaschine, die nach dem erfindungsgemäßen Verfahren gesteuert wird, Bahnabweichungen in der Praxis kaum auf.

Um eine möglichst exakte Ausrichtung der Maschine vor Beginn eines frei durchfahrenen Teilabschnittes der Bewegungsbahn sicherzustellen, erfolgt vorteilhaft im Endbereich einer erkannten Struktur eine gesonderte Überprüfung der Ausrichtung der Bodenreinigungsmaschine relativ zu der erkannten Struktur und bei Abweichung von der Parallelausrichtung eine Ausrichtungskorrektur durch entsprechende Befehle an Antrieb und/oder Lenkung.

Für die Durchführung der Überprüfung der Ausrichtung sind zwei Methoden bevorzugt vorgesehen:
Bei der ersten Methode erfolgt die Überprüfung relativ zu der erkannten Struktur in deren Endbereich durch Vergleich mehrerer aufeinanderfolgender Abstandsmessungen bei sich fortbewegender Bodenreinigungsmaschine. Diese Methode hat den Vorteil, daß schon ein einzelner Entfernungsmesser ausreichend ist. Bei Stillstand der Maschine ist die Überprüfung mit einem Entfernungsmesser allerdings erheblich schwieriger. Diesen Nachteil vermeidet die zweite Methode, bei der vorgesehen ist, daß die Überprüfung der Ausrichtung der Bodenreinigungsmaschine relativ zu der erkannten Struktur in deren Endbereich durch Vergleich von gleichzeitig mit zwei an einer Längsseite der Maschine angeordneten Entfernungsmessern durchgeführten Abstandsmessungen bei sich fortbewegender oder stillstehender Maschine erfolgt. Hier ergibt sich eine Aussage über die Ausrichtung der Maschine aus der Differenz der Meßergebnisse der beiden gleichzeitig betriebenen Entfernungsmesser und es ist eine Überprüfung der Ausrichtung der Maschine sowohl im Stand als auch bei Fahrt möglich.

Um Störungen des Arbeitsablaufes der Bodenreinigungsmaschine zu vermeiden und um einen möglichst flexiblen und wenig Überwachungsaufwand durch Menschen erfordernden Einsatz der Maschine zu gewährleisten, ist vorgesehen, daß im Verlauf der vorgesehenen Bewegungsbahn auftretende Hindernisse durch geeignete Sensoren, wie mechanische und/oder optische und/oder akustische Sensoren, die vorzugsweise an der Vorderseite der Bodenreinigungsmaschine angeordnet sind, erkannt werden und daß bei einem Ansprechen dieser Sensoren ein in einem Datenspeicher abgelegtes Programm zur selbsttätigen Umfahrung des Hindernisses und Wiederauffindung der vorgesehenen Bewegungsbahn aktiviert wird. Hierdurch wird erreicht, daß die Maschine kleineren Hindernissen selbständig ausweicht und anschließend wieder auf ihrer vorgesehenen Bahn weiterfährt und -arbeitet.

Für die Erzeugung der im Datenspeicher der Bodenreinigungsmaschine gespeicherten Wegstrecken-Daten sind bevorzugt zwei alternative Möglichkeiten vorgesehen: bei der ersten werden die Daten im Teach-in-Verfahren bei einem manuell gesteuerten Abfahren des zu bearbeitenden Flächenareals erzeugt. Nach dieser Teach-in-Fahrt fährt die Maschine den einmal eingespeicherten Weg immer wieder ab, wobei dies vorteilhaft mit einer gegenüber der Teach-in-Fahrt erhöhten Geschwindigkeit und damit kürzeren Zeit erfolgt. Bei dem zweiten Verfahren werden die Daten durch selbsttätiges Abfahren des zu bearbeitenden Flächenareals unter Kontrolle eines Programms mit Fahrtregeln für eine selbsttätige und das Flächenareal vollständig abdeckende Streckenfindung bei gleichzeitiger Speicherung der zurückgelegten Wegteilstrecken, gegebenenfalls mit anschließender, die Gesamtweglänge und/oder die Gesamtbearbeitungszeit minimierender Optimierung der Bewegungsbahn und Erzeugung entsprechender Wegteilstrecken-Daten erzeugt. Dieses Verfahren bietet den Vorteil, daß selbst beim ersten Einsatz der Maschine in einer ihr "unbekannten" Umgebung eine manuelle Führung nicht erforderlich ist. Andererseits ist hier jedoch ein erhöhter Programmieraufwand und ein größerer Datenspeicher erforderlich. Die Auswahl des Verfahrens der Datenerzeugung richtet sich im wesentlichen danach, ob eine Maschine häufig ihren Einsatzort wechselt oder ob sich z. B. ständig räumliche Veränderungen in ihrem Einsatzbereich vollziehen oder nicht. Bei häufigen Ortswechseln oder räumlichen Veränderungen wird die als zweite ge-

6

nannten Methode im allgemeinen vorzuziehen sein. Die anschließende Optimierung dient der Minimierung der Wegstrecke und der Arbeitszeit. Algorithmen für eine derartige Problemstellung und deren Lösung sind an sich bekannt und für einen Fachmann auf das Erfindungsgebiet übertragbar.

Die Lösung des zweiten Teils der Aufgabe gelingt erfindungsgemäß durch eine Bodenreinigungsmaschine der eingangs genannten Art gemäß dem kennzeichnenden Teil von Anspruch 8. Durch die einzeln antreibbaren Räder wird keine aktive Lenkvorrichtung benötigt, sondern es genügen ein oder zwei verschwenkbare Nachlaufräder. Außerdem wird hierdurch, insbesondere bei auch rückwärts betreibbarem Antrieb, eine ausgezeichnete Wendigkeit der Maschine erreicht, was für ihren Einsatz, z. B. in Supermärkten, sehr vorteilhaft ist. Zur Messung der zurückgelegten Weckstrecke dienen die jeweils einem Rad zugeordneten Drehimpulsgeber. Als weiterer Sensor ist wenigstens ein Entfernungsmesser vorgesehen, der den Abstand der Maschine etwa senkrecht zu deren Fahrtrichtung von seitlich von der Maschine befindlichen Strukturen feststellt. In weiterer Ausgestaltung der Maschine können auch an beiden Längsseiten der Maschine jeweils ein oder zwei horizontal beabstandete Entfernungsmesser angeordnet sein. Auch können aus Sicherheitsgründen jeweils mehrere Entfernungsmesser übereinander angeordnet sein, falls die zu erkennenden Strukturen dies erfordern.

Weiterhin ist vorgesehen, daß die Maschine Sensoren, wie mechanische und/oder optische und/oder akustische Sensoren, zur Erkennung von Hindernissen und zur Auslösung von Ausweich- und/oder Not-Halt-Manövern als dritte Sensoren aufweist. Hierdurch wird einerseits die Ausführung von Ausweichmanövern ermöglicht und andererseits die für einen praktischen Einsatz erforderliche Sicherung gegen Unfälle mit Sach- oder sogar Personenschäden gewährleistet.

Im folgenden wird die Erfindung beispielhaft anhand einer Zeichnung näher erläutert. Die Figuren der Zeichnung zeigen im einzelnen:

Figur 1 eine Bodenreinigungsmaschine gemäß Erfindung in schematischer Darstellung und

Figur 2 ein Einsatzbeispiel der Maschine, ebenfalls in schematischer Darstellung.

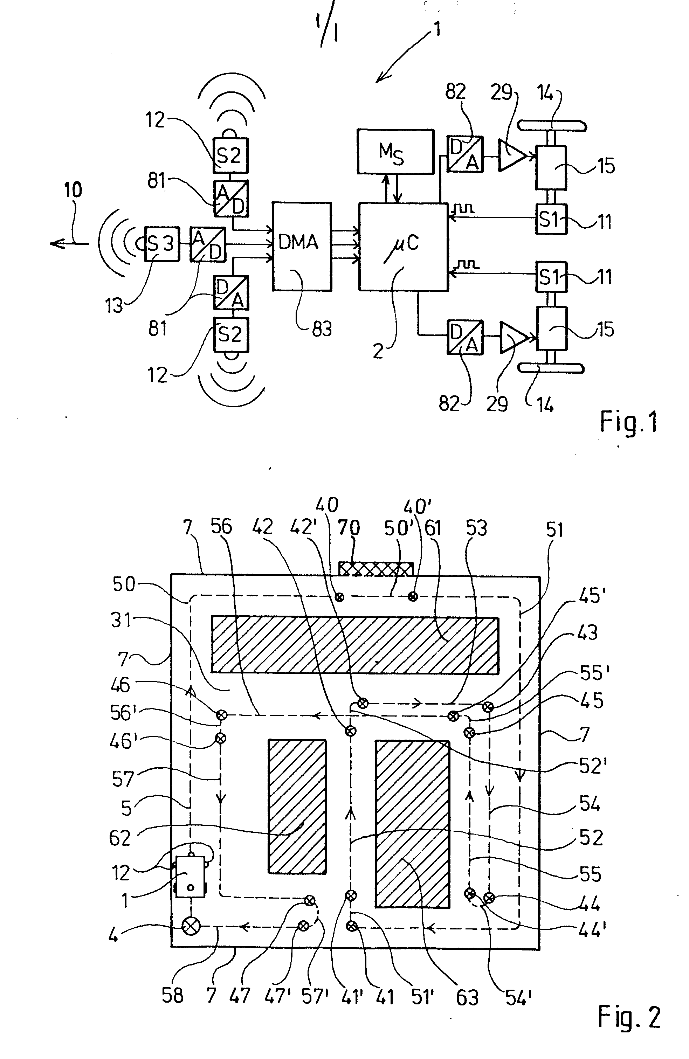

Wie die Figur 1 der Zeichnung zeigt, besteht das schematisch dargestellte Ausführungsbeispiel der Bodenreinigungsmaschine 1 gemäß der vorliegenden Erfindung aus einem Mikrocomputer als Steuereinheit 2, dem eine Anzahl von Komponenten zugeordnet sind. Zur Fortbewegung der Maschine 1 dienen von jeweils einem Motor 15 unabhängig voneinander angetriebene Räder 14. Die beiden Motoren 15 werden jeweils über Digital-Analog-Wandler 82 und Verstärker 29 vom Mikrocomputer 2 angesteuert. Zur Messung der von den Rädern 14 jeweils zurückgelegten Wegstrecken dienen zwei Drehimpulsgeber 11 als erste Sensoren der Maschine 1. Jeweils ein Drehimpulsgeber 11 ist einem Motor 15 bzw. einem Rad 14 fest zugeordnet. Seine Informationen liefert jeder Drehimpulsgeber 11 an den Mikrocomputer 2, hier in Form von Rechtecksignalfolgen.

Zur Speicherung von Daten und Programmen ist dem Mikrocomputer 2 ein Daten- und Programmspeicher 21 zugeordnet. Dieser Speicher 21 kann ein fest in der Maschine 1 installierter Speicher sein; er kann aber auch ganz oder teilweise als transportabler Speicher ausgebildet sein, z. B. als Magnetband-Kassette oder Diskette.

Als zweite Sensoren weist die Maschine 1 Entfernungsmesser 12 auf, die vorzugsweise so angeordnet sind, daß sie in einem etwa rechten Winkel zur Fahrtrichtung den seitlichen Abstand der Maschine 1 von seitlich neben der Bewegungsbahn verlaufenden Strukturen feststellen. Ihre Meßergebnisse geben die Entfernungsmesser 12 jeweils über Analog-Digital-Wandler 81 zunächst an einen Zwischenspeicher 83, der seinerseits mit der Steuereinheit 2, dem Mikrocomputer, gekoppelt ist.

Als dritter Sensor schließlich ist bei dem dargestellten Ausführungsbeispiel der Maschine 1 noch ein in deren Fahrtrichtung, wie sie durch den Pfeil 10 angedeutet ist, wirkender Entfernungsmesser 13 vorgesehen. Dieser Entfernungsmesser 13 ist ebenso wie die Entfernungsmesser 12 vorzugsweise ein Ultraschall- oder Laserentfernungsmesser. Der Entfernungsmesser 13 dient der Erkennung von Hindernissen, die auf der vorgesehenen Bewegungsbahn der Maschine 1 liegen. Auch dieser Entfernungsmesser 13 gibt seine Meßergebnisse über einen Analog-Digital-Wandler 81 zunächst an den Zwischenspeicher 83 und von dort an die Steuereinheit 2.

Aus Gründen der Übersichtlichkeit wurden Werkzeuge zur Bodenbearbeitung sowie weitere Teile des Fahrgestells, z. B. ein oder zwei verschwenkbare Nachlaufräder, in der Figur 1 nicht dargestellt.

Im Betrieb der Maschine 1 arbeitet das Verfahren zum automatischen Führen der Maschine 1 wie folgt:

Aus dem Speicher 21 werden nach und nach dort gespeicherte Daten über Wegteilstrecken abgerufen und als entsprechende Fahrtbefehle an die Motoren 15 der Antriebsräder 14 gegeben. Die korrekte Ausführung der Befehle wird durch die ersten Sensoren, die Drehimpulsgeber 11 sowie die zweiten Sensoren, die Entfernungsmesser 12, überwacht. Die Daten für die Wegteilstrecken setzen sich hierbei zusammen aus Informationen über die zurückzulegende Wegstrecke und die von seitlich von der Bewegungsbahn vorhandenen Strukturen einzuhaltenden Abstände.

Bei einem Fehlen von seitlichen Führungsstrukturen fährt die Maschine 1 frei, d. h. ohne Kontrolle durch die zweiten Sensoren 12. In diesen nicht geführten Wegteilstrecken erfolgt eine Kontrolle lediglich über die ersten Sensoren, die Drehimpulsgeber 11.

Um vor Beginn einer frei durchfahrenen Wegteilstrecke eine möglichst genaue Positionierung der Maschine 1 in der gewünschten Fahrtrichtung zu erreichen, wird eine gesonderte Überprüfung ihrer Ausrichtung gemäß der vorangehenden Beschreibung und den Ansprüchen 2 bis 4 durchgeführt.

Die Erzeugung der in dem Speicher 21 abgelegten Daten wurde ebenfalls bereits im vorangehenden beschrieben. Außer wie dort beschrieben, können diese Daten auch beispielsweis durch Eintasten über eine Eingabetastatur oder auf einer andere bekannte Art und Weise erzeugt werden.

Bei Auftreten von Hindernissen auf der vorgesehenen Bewegungsbahn spricht der dritte Sensor, der Entfernungsmesser 13 an. Durch diesen wird vorzugsweise ein ebenfalls im Speicher 21 gespeichertes Ausweichprogramm aktiviert, unter dessen Kontrolle die Maschine 1 das Hindernis umfährt und auf die vorgesehene Bewegungsbahn zurückkehrt.

Ein Einsatzbeispiel der Maschine 1 unter Führung durch das Verfahren gemäß Erfindung ist in der Figur 2 in schematisierter und vereinfachter Form dargestellt. Die Figur 2 zeigt einen von einer Begrenzungswand 7 allseitig umgebenden Raum mit einer Bodenfläche 31, auf welcher mehrere Regale 61, 62 und 63 aufgestellt sind. Zwischen den einzelnen Regalen 61 bis 63 sowie zwischen den Regalen 61 - 63 und der umlaufenden Außenwand 7 verbleiben freie, zu reinigende Bodenflächen. Diese freien Bodenflächen werden durch die Maschine 1, die im Beispiel nach Figur 2 in der linken unteren Ecke in der Nähe eines Startpunktes 4 positioniert ist, entlang einer durch eine gestrichelte Linie dargestellten Bewegungsbahn 5 abgearbeitet. Die Bewegungsbahn 5 ist in Wegteilstrecken unterteilt, die zum einen Teil unter Führung durch die seitlichen Entfernungsmesser 12 und zum anderen Teil ohne Führung durch die seitlichen Entfernungsmesser 12 zurückgelegt werden.

Bei Verfolgung der Bewegungsbahn 5 ergibt sich beispielhaft etwa der folgende Ablauf des Verfahrens:

Ausgehend vom Startpunkt 4 bewegt sich die Maschine 1 zunächst unter Führung durch die in Fahrtrichtung gesehen links von ihr verlaufende Außenwand 7, bis sie nach einer Rechtskurve das Ende ihrer ersten Wegteilstrecke 50 erreicht. Dieser Endpunkt der ersten geführten Wegteilstrecke 50 ist          mit der Bezugsziffer 40 gekennzeichnet. An dieser Stelle ist die Außenwand 7 durch eine zur Führung der Maschine 1 nicht geeignete Struktur 70 unterbrochen. Eine Führung durch den linken Entfernungsmesser 12 der Maschine 1 kann hier also nicht erfolgen. Hier besteht nun die Möglichkeit, die Maschine 1 frei fahrend bis zum Punkt 40' zu bewegen, von wo ab sie sich wieder mit ihrem linken Entfernungsmesser 12 an der Außenwand 7 orientieren kann. Eine zweite Möglichkeit besteht darin, den rechten Entfernungsmesser 12 zu aktivieren, so daß eine Führung durch die der Maschine zugewandte Kante des Ragels 61 erfolgt.

Außer geradlinig verlaufenden, frei durchfahrenen Strecken, wie die Strecke 50', können auch in Kurven frei durchfahrene Strecken, wie z. B. die Strecke 54' auftreten. Wie aus der Figur 2 ersichtlich ist, sind die frei durchfahrenen Strecken 50' - 57' vergleichsweise kurz, während die geführt durchfahrenen Strecken 50 bis 58 vergleichsweise wesentlich länger sind. Größere Abweichungen der Maschine 1 von der vorgesehenen Bewegungsbahn können so in der Praxis nicht auftreten.

Der Verlauf der Bewegungsbahn ist in keiner Weise festgelegt; er ist vielmehr frei wählbar und im Hinblick auf die zurückgelegte Wegstrecke oder Arbeitszeit optimierbar. Auch muß nicht, wie in dieser Figur dargestellt, der Startpunkt 4 zugleich der Endpunkt sein; der Endpunkt kann an beliebiger anderer Stelle auf der zu bearbeitenden Fläche 31 liegen. Weiterhin muß der Verlauf der führenden Strukturen, wie Wände oder Regale, nicht gradlinig sein, sondern er kann auch geschwungen oder gebogen sein.

Patentansprüche:

1. Verfahren zum automatischen Führen von selbstfahrenden Bodenreinigungsmaschinen längs einer vorgegebenen Bewegungsbahn auf einem begrenzten, abzuarbeitenden Flächenareal, bei welchem eine Folge von in einem Datenspeicher gespeicherten Wegteilstrecken abgerufen und von der Maschine abgefahren wird und bei welchem Markierungen mittels wenigstens eines Sensors erkannt und in Bahnkorrektur-Steuerbefehle für Antrieb und/oder Lenkung der Maschine umgesetzt werden, dadurch gekennzeichnet, daß als Markierungen entlang der Bewegungsbahn (5) auf oder über dem zu bearbeitenden Flächenareal (31) vorhandene, lineare oder geschwungene Strukturen, wie Regalkanten und/oder -ränder (61 - 63) und/oder Begrenzungswände (7), verwendet werden, daß die Bodenreinigungsmaschine (1) auf ersten Teilabschnitten (50 - 58) ihrer Bewegungsbahn (5) mittels wenigstens eines seitwärts gerichteten Entfernungsmessers (12), wie Ultraschall- oder Laserentfernungsmessers, entlang · den erkannten Strukturen (61 - 63, 7) geführt wird und daß die Bodenreinigungsmaschine (1) auf zweiten Teilabschnitten (50' - 57') ihrer Bewegungsbahn (5) ohne ·Führung durch vorhandene Strukturen (61 - 63, 7) vom Ende einer erkannten Struktur (61 - 63, 7) bis zum Anfang einer nächsten zu erkennenden Struktur (61 - 63, 7) frei fährt.

2. Verfahren nach Anspruch 1, dadurch gekennzeichnet, daß im Endbereich einer erkannten Struktur (61 - 63, 7) eine gesonderte Überprüfung der Ausrichtung der Bodenreinigungsmaschine (1) relativ zu der erkannten Struktur (61 - 63, 7) und bei Abweichung von der Parallelausrichtung eine Ausrichtungskorrektur durch entsprechende Befehle an Antrieb (15) und/oder Lenkung erfolgt.

3. Verfahren nach den Ansprüchen 1 und 2, dadurch gekennzeichnet, daß die Überprüfung der Ausrichtung der Bodenreinigungsmaschine (1) relativ zu der erkannten Struktur (61 - 63, 7) in deren Endbereich durch Vergleich mehrerer aufeinanderfolgender Abstandsmessungen bei sich fortbewegender Bodenreinigungsmaschine (1) erfolgt.

4. Verfahren nach den Ansprüchen 1 und 2, dadurch gekennzeichnet, daß die Überprüfung der Ausrichtung der Bodenreinigungsmaschine (1) relativ zu der erkannten Struktur (61 - 63, 7) in deren Endbereich durch Vergleich von gleichzeitig mit zwei an einer Längsseite der Maschine (1) angeordneten Entfernungsmessern (12) durchgeführten Abstandsmessungen bei sich fortbewegender oder stillstehender Maschine (1) erfolgt.

5. Verfahren nach den Ansprüchen 1 bis 4, dadurch gekennzeichnet, daß im Verlauf der vorgesehenen Bewegungsbahn (5) auftretende Hindernisse durch geeignete Sensoren (13), wie mechanische und/oder optische und/oder akustische Sensoren, die vorzugsweise an der Vorderseite der Bodenreinigungsmaschine (1) angeordnet sind, erkannt werden und daß bei einem Ansprechen dieser Sensoren (13) ein in einem Datenspeicher (21) abgelegtes Programm zur selbsttätigen Umfahrung des Hindernisses und Wiederauffindung der vorgesehenen Bewegungsbahn (5) aktiviert wird.

6. Verfahren nach den Ansprüchen 1 bis 5, dadurch gekennzeichnet, daß die im Datenspeicher (21) für die abzufahrenden Wegteilstrecken (50 - 58, 50' - 57') gespeicherten Daten im Teach-in-Verfahren bei einem manuell gesteuerten Abfahren des zu bearbeitenden Flächenareals (31) erzeugt werden.

7. Verfahren nach den Ansprüchen 1 bis 5, dadurch gekennzeichnet, daß die im Datenspeicher (21) für die abzufahrenden Wegteilstrecken (50 - 58, 50' - 57') gespeicherten Daten durch selbsttätiges Abfahren des zu bearbeitenden Flächenareals (31) unter Kontrolle eines Programms mit Fahrtregeln für eine selbsttätige und das Flächenareal (31) vollständig abdeckende Streckenfindung bei gleichzeitiger Speicherung der zurückgelegten Wegteilstrecken (50 - 58, 50' - 57'), gegebenenfalls mit anschließender, die Gesamtweglänge und/oder die Gesamtbearbeitungszeit minimierender Optimierung der Bewegungsbahn und Erzeugung entsprechender Wegteilstrecken-Daten erzeugt werden.

8. Bodenreinigungsmaschine zur Durchführung des Verfahrens nach den Ansprüchen 1 bis 7, mit einem Fahrwerk mit Antrieb und Lenkung, mit Mitteln zur Trocken- und/oder Naßreinigung der befahrenen Bodenfläche, mit einem Datenspeicher zur Speicherung einer abrufbaren Folge von Wegteilstrecken und mit einer den Antrieb und/oder die Lenkung in Abhängigkeit von den im Datenspeicher gespeicherten sowie von Positionserkennungssensoren gelieferten Daten steuernden Steuereinheit, dadurch gekennzeichnet, daß die Maschine (1) über zwei unabhängig voneinander antreibbare Räder (14) verfügt, von denen je eines links und rechts an der Maschine (1) angeordnet ist, daß die Maschine (1) über wenigstens ein nicht angetriebenes, frei verschwenkbares Nachlaufrad verfügt, daß an den beiden angetriebenen Rädern (14) mit der Steuereinheit (2) verbundene Drehimpulsgeber (11) zur Messung der von jedem Rad (14) zurückgelegten Wegstrecke als erste Sensoren angeordnet sind und daß die Maschine (1) an wenigstens einer Längsseite wenigstens einen mit der Steuereinheit (2) verbundenen Entfernungsmesser (12), wie Ultraschall- oder Laserentfernungsmesser, als zweiten Sensor aufweist.

9. Bodenreinigungsmaschine nach Anspruch 8, dadurch gekennzeichnet, daß sie Sensoren (13), wie mechanische und/oder optische und/oder akustische Sensoren, zur Erkennung von Hindernissen und zur Auslösung von Ausweich- und/oder Not-Halt-Manövern als dritte Sensoren aufweist.

Fig.1

Fig. 2

**0221423**

Nummer der Anmeldung

EP 86 11 4425

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | EP-A-0 142 594 (AUTOMAX K.K.) * Seite 5, Zeile 3 - Seite 6, Zeile 30; Seite 8, Zeile 3 - Seite 10, Zeile 20; Seite 11, Zeile 32 - Seite 14, Zeile 27; Abbildungen 1,2,7,9 * | 1,5,7 | G 05 D 1/02 A 47 L 11/40 |
| Y | | 6,8,9 | |
| A | | 2-4 | |
| | --- | | |
| Y | FR-A-2 526 181 (TRAITEMENT DE L'INFORMATION TECHNIQUES NOUVELLES) * Seite 2, Zeilen 10-34; Seite 7, Zeile 30 - Seite 8, Zeile 3; Abbildung 1 * | 6 | |
| | | | RECHERCHIERTE SACHGEBIETE (Int. Cl.4) |
| | --- | | |
| Y | GB-A-2 042 217 (AB VOLVO) * Zusammenfassung; Seite 4, Zeilen 51-59; Abbildung 3 * | 8,9 | G 05 D A 47 L |
| | --- | | |
| A | EP-A-0 050 101 (AB VOLVO) * Zusammenfassung; Abbildung 1 * | 3,4 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 27-01-1987 | HELOT H.V. |